# EUROPEAN PATENT SPECIFICATION

(11) **EP 0 427 023 B1**
(45) Date of publication and mention of the grant of the patent: **05.01.2000**
(21) Application number: 90120014.7
(22) Date of filing: 18.10.1990
(51) Int. Cl.: G06F 12/08, G06F 15/16

(54) **Data transmission control apparatus for parallel processing system**
Datenübertragungssteuervorrichtung für Parallelverarbeitungssysteme
Appareil de contrôle de transmission de données pour un système de traitement en parallèle

(30) Priority: 08.11.1989 JP 29068489
(43) Date of publication of application: 15.05.1991
(73) Proprietor: FUJITSU LIMITED, Kawasaki-shi, Kanagawa 211 (JP)
(72) Inventor: Shimizu, Toshiyuki, Yokohama-shi, Kanagawa 235 (JP); Ishihata, Hiroaki, Setagaya-ku, Tokyo 154 (JP)
(74) Representative: Schmidt-Evers, Jürgen, Dipl.-Ing.

(56) References cited:
- US-A- 4 322 815
- COMPUTER. vol. 21, no. 11, November 1988, LONG BEACH US pages 26 - 37; P. STENSTROM: 'Reducing contention in shared-memory multiprocessors'
- IEEE JOURNAL OF SOLID-STATE CIRCUITS. vol. 24, no. 4, August 1989, NEW YORK US pages 881 - 888; K. SAWADA: 'A 32-kbyte integrated cache memory'
- EDN ELECTRICAL DESIGN NEWS. vol. 32, no. 25, 10 December 1987, NEWTON, MASSACHUSETTS US pages 245 - 260; D. SHEAR: 'Cache-memory systems benefit from on-chip solutions'
- ELECTRONIC DESIGN. vol. 36, no. 5, 3 March 1988, HASBROUCK HEIGHTS, NEW JERSEY pages 19 - 24; M. LEONARD: 'Cache tag RAMs hasten main memory response'

## Description

### BACKGROUND OF THE INVENTION

### Field of the Invention

The present invention relates to data transfer between processor elements in a parallel processing system which interconnects a plurality of processor elements through communication paths.

More and more powerful and high-speed computer system is being demanded due to the recent increase in data quantity and diversification of data processing.

As a means for realizing a high-speed computer system, a parallel processing system, i.e., a computer system with a plurality of processor elements, each having its own main memory, connected in the form of a matrix through communication paths, is widespread. A parallel processing system can improve processing capability by increasing the number of processor elements. When the number of processor elements increases, frequency of information exchange between the processor elements increases, but the quantity of data for each information exchange (called a message hereafter) can be small. For this reason, a parallel processing system is required to transfer a great number of messages between the processor elements effectively.

A computer memory is often hierarchically structured to increase the performance of a processor element. Therefore, in a parallel processing system consisting of processor elements with hierarchical memory structure, it is also required to effectively transfer messages between processor elements.

### Description of the Related Art

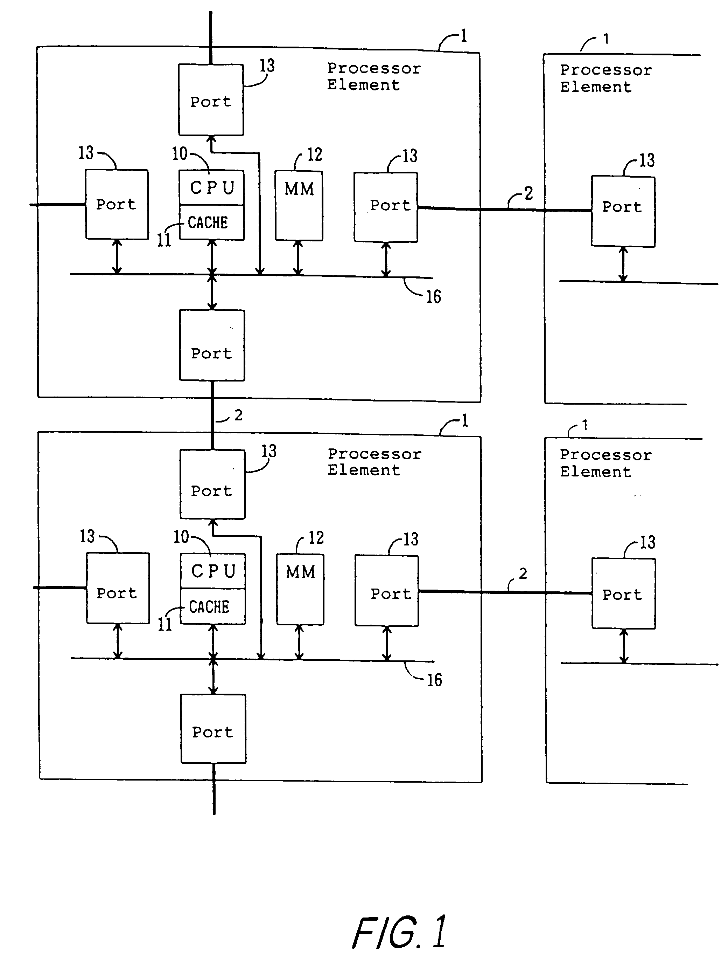

Fig. 1 shows a configuration example of a parallel processing system.

Processor elements 1 are interconnected by communication paths 2 in the form of a matrix via ports 13 and executes the same or different programs while mutually exchanging data (messages) over communication paths 2.

To write data in a port 13 to transmit to other processor elements, it is necessary to previously ensure that the port 13 is ready for writing therein (called ready status hereafter).

Data transmission was conventionally carried out by writing data in a port 13 by means of hardware in a direct memory access (called DMA hereafter) mode or software.

When data transfer is carried out by hardware, a DMA controller (called DMAC hereafter, not shown in Fig. 1), which is connected to the common bus and a port 13, controls data transfer while checking the port 13 for ready status. When data transfer is carried out by software, a program issues a Move instruction, for example, to write data into the port 13 after recognizing ready status by polling or interrupt processing.

In general, to transmit a large quantity of data blocks, DMA transfer by hardware is quite effective, whereas data transfer by software is less effective because it takes time for polling or interrupt processing, depending on instruction execution speed of a processor (called CPU hereafter).

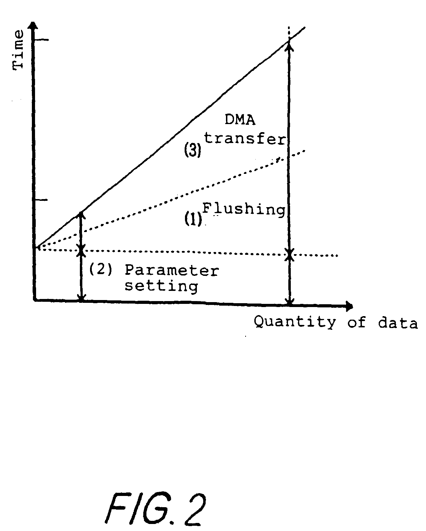

Fig. 2 shows an example of the quantity of data vs. the time required to transfer the data in a DMA mode.

In the example, the CPU 10 of processor element 1 is assumed to be equipped with a well-known cache memory (may be called CACHE hereafter) 11.

The CPU 10 needs a function (called flush) to write the contents of the cache memory 11 into the main memory (may be called MM hereafter) 12 in units of a block (called a line hereafter) to keep the contents of both memories matched.

Data transfer in a DMA mode is performed between the main memory 12 and a port 13 under the control of an above-mentioned DMAC. Therefore, the time required for DMA transfer is determined by totaling following three times (1), (2) and (3):
time (1) required to write data stored in the cache memory 11 into the main memory 12 (flushing) for a processor element having a cache memory,
time (2) required to set parameters for data transfer (e.g. starting address on main memory 12, length of data transferred, address on a record medium, input/output command, etc.) and
time (3) required for DMA-mode data transfer per se.

Times (1) and (3) are proportional to data quantity, while time (2) is constant irrespective of data quantity.

As is understood from Fig. 2, when data quantity is large, parameter setting is not such a large load, but when small as is a message exchanged between the processor elements 1, it proves to be quite a large load.

Moreover, since a message, whose quantity may be small, is not arranged in a mass generally, data pieces have to be buffered (or gathered in an area of main memory 12) to prepare a message, prior to a DMA transfer of the message. On the other hand, a message received by the other processor element 1 has to be scattered to the areas of main memory 12 as required.

Therefore, a problem is that parameter setting, flushing, buffering and scattering cause a heavy load to a program and reduce the main memory areas for user use due to the areas for buffering use because these are all carried out by a CPU program.

Another problem is that checking a port 13 for ready status by a program loop will cause a tremendous load to the program. Moreover, when a message used to control communication between processor elements 1 is transmitted, a transmission delay caused by such buffering and scattering will reduce the performance of a parallel processing system as a whole.

From COMPUTER, vol. 21, no. 11, November 1988, LONG BEACH US, pages 26-37; P. STENSTRÖM: 'Reducing contention in shared-memory multiprocessors' a parallel processing system is known, wherein a plurality of processors share part of the available memory. In order to avoid performance degradation due to memory sharing, an interconnection network is provided for reducing the processor-memory traffic as much as possible. This interconnection network may contain a number of switching elements which interconnect the respective processors in such a way that one unique part exists between every processor-memory pair. If a memory request is blocked, it is queued in the switching element until the link is free. Furthermore, a cache memory may be provided within each processor. However, this document does not deal with the transmission of data between two peocessing systems.

Furthermore, in IEEE JOURNAL OF SOLID STATE CIRCUITS, vol. 24, no. 4, August 1989, NEW YORK US, pages 881-888; K. SAWADA: 'A 32-kbyte integrated cache memory' it is described to decide on occurence of a memory request from a CPU whether the requested data is in the cache memory or not. Therefore, the use of a tag is proposed. If the tag content matches with the requested address, it is judged that the requested data is stored in the cache memory and the requested data is read from the cache memory. If the tag content does not match with the requested address, the requested data are fetched from the main memory and the cache memory is updated. However, this prior art document does not relate to the transmission of data between processing systems, either.

### SUMMARY OF THE INVENTION

It is an object of the present invention as defined in the appended claims to provide a data transmission control apparatus for a parallel processing system interconnecting a plurality of processor elements through communication paths which can transmit messages between processor elements quickly, with a reduced memory area for message buffering and with a reduced load on a program.

In particular, it is an object of the present invention to provide an economical data transmission control apparatus which can achieve the above object not only for a processor element without a cache memory but also for a processor element having a cache memory.

According to the present invention, the above objects are achieved by a data transmission control apparatus according to claim 1. The dependent claims define advantageous and preferred embodiments of the present invention.

### BRIEF DESCRIPTION OF THE DRAWINGS

Fig. 1 shows a configuration example of a parallel processing system;
Fig. 2 shows an example of the quantity of data vs. the time required to transfer the data in a DMA mode;
Fig. 3 is a schematic block diagram explaining the principle of the present invention;
Fig. 4 is a timing chart illustrating memory access;
Fig. 5 is a schematic block diagram illustrating the first embodiment of the present invention;
Fig. 6 is a schematic block diagram illustrating the second embodiment of the present invention;
Fig. 7 is a schematic block diagram illustrating the third embodiment of the present invention; and
Fig. 8 is a diagram for evaluating the present invention in comparison with the related art.

Throughout the above-mentioned drawings, identical reference numerals are used to designate the same or similar component parts.

### DESCRIPTION OF THE PREFERRED EMBODIMENTS

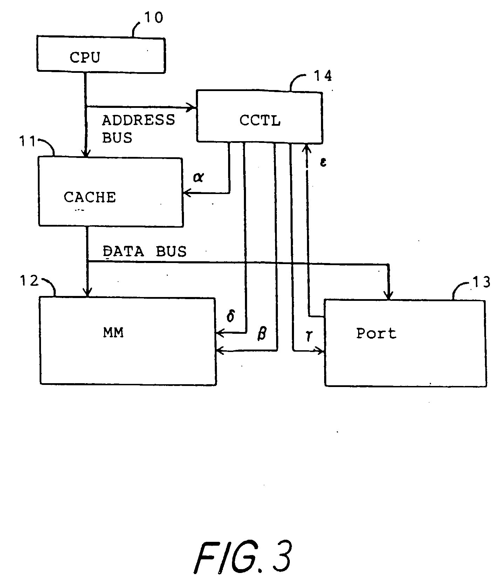

Fig. 3 is a schematic block diagram explaining the principle of the present invention in which a processor element with a cache memory is taken as an example.

The present invention has realized a method to directly transfer a message from a main memory 12 or a cache memory 11 to a port 13 in order to transmit a message between processor elements 1 by providing a special instruction called Line Send.

Port 13 is a device which transmits and receives data through a transmission line. As a transmitter, when data is written therein, it starts transmitting the data and, when it becomes ready to write the next data, it provides a ready signal ε (or holds the ready status in a not-shown status register). As a receiver, it receives the data from the transmitter and, on receipt of data, provides a received signal in the same way. Since a receive operation are performed by the processor element 1 in a manner similar or reverse to a transmit operation, only the circuit for writing a message in port 13 is disclosed in the following descriptions.

Before going to the first embodiment of the present invention, the cache memory 11 to which the present invention relates is explained.

Data transfer between the cache memory 11 and the main memory (MM) 12 is carried out in units of a line. When the cache memory 11 does not hold the data addressed by the CPU 10 (hereafter called data not cached or cache miss), a line of data (e.g. 16 bytes) is read from the main memory 12 and stored in the cache memory.

Therefore, a system with a cache memory needs a function to write (flush) the contents of the cache memory 11 into the main memory 12 to keep the contents of both memories matched.

A cache memory controller (CCTL) 14 embodying the present invention controls flush and line send operations as follows:

A flush operation to transfer the data cached in the cache memory 11 into address A of the main memory (MM) 12 is performed by issuing a Flush instruction (a write instruction with the address operand designating as "A + FLUSH"). In the same way, a line send operation to transfer cached data into address A of the main memory 12 is performed by issuing a Line Send instruction (a write instruction with the address operand designating as "A + SEND").

Assuming that a CPU has an instruction format whose address part includes 32 address bits, but only 24 low-order address bits are used for addressing the main memory 12 (including cache memory 11) consisting of up to 16,777,216 bytes. The remaining 8 high-order bits are used for specifying an ordinary memory access, Flush instruction or Line Send instruction by designating the high-order 8 bits as hexadecimal 0, 1 and 2, respectively.

That is, when the high-order 8 address bits are set to hexadecimal 0 (all zeros), the CPU 10 makes an ordinary memory access, with the CCTL 14 acting as an ordinary cache controller.

When Flushing is specified by setting the high-order 8 address bits to hexadecimal 1, binary 00000001 and the address of the data to be flushed appears in the high-order 8 address bits and low-order 24 address bits of the address bus, respectively. When the CCTL 14 interprets it as a Flush instruction and finds that the addressed data is cached in the cache memory 11, it activates a write control signal α to read the data from the cache memory 11 and to output the read data onto the data bus of common bus interface. Then, it activates a write control signal β to write the data on the data bus into the main memory (MM) 12.

When Line Sending is specified by setting the high-order 8 address bits to hexadecimal 2, binary 00000010 and the address of data to be line-sent appears in the high-order 8 address bits and low-order 24 address bits of the address bus, respectively. When the CCTL 14 interprets it as a Line Send instruction, it recognizes that the port 13 is ready to write data therein based on the ready signal ε and that the addressed data is cached in the cache memory 11. After that, it activates a write control signal α to read the data from the cache memory 11 and to output the read data onto the data bus. Then, it activates a write control signal γ to write the data on the data bus into a port 13.

When Line Sending is specified and addressed data is not cached in the cache memory 11, CCTL 14 activates a write control signal δ to read the data from the main memory 12 and to output the read data onto the data bus. Then, it activates a write control signal γ to write the data on the data bus into the port 13.

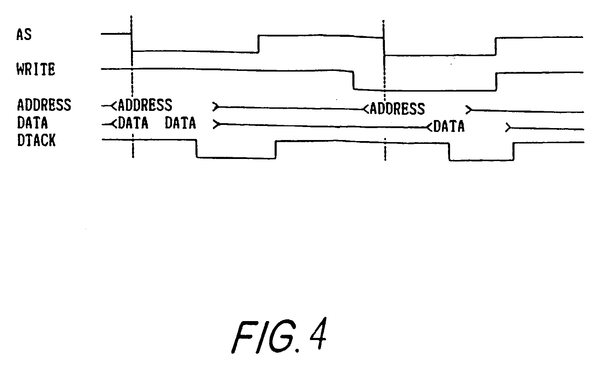

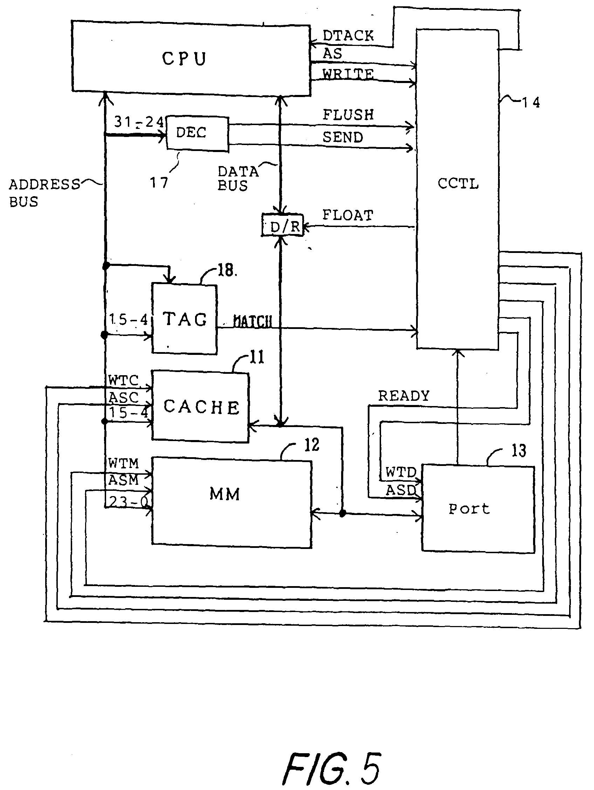

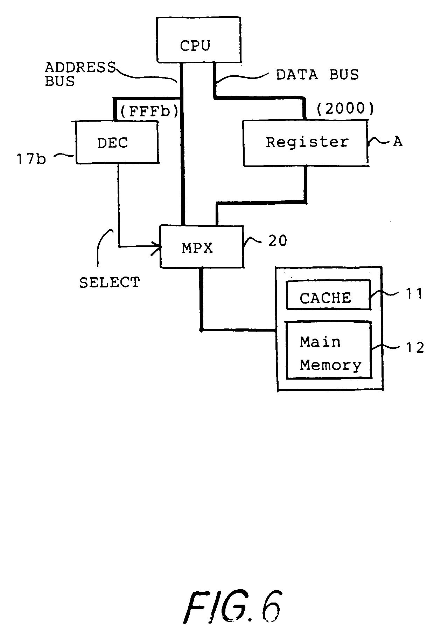

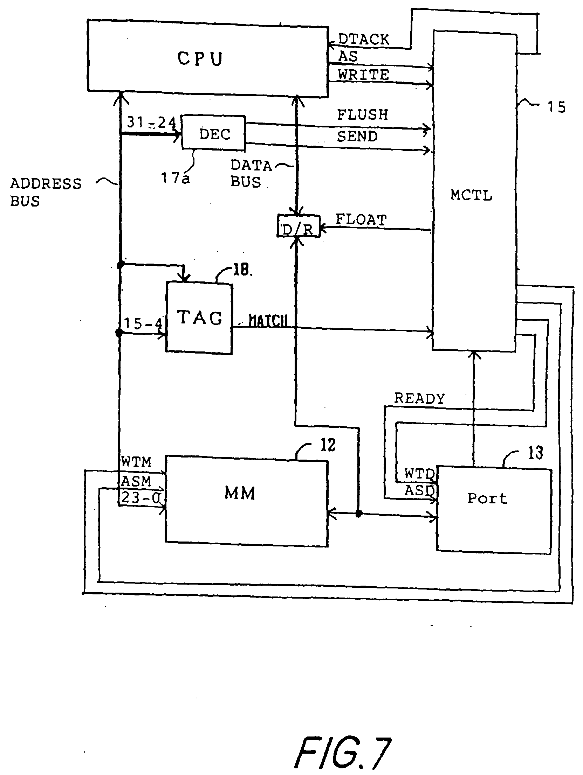

Fig. 4 is a timing chart illustrating memory access. Fig. 5 is a schematic block diagram illustrating the first embodiment of the present invention. Fig. 6 is a schematic block diagram illustrating the second embodiment of the present invention. Fig. 7 is a schematic block diagram illustrating the third embodiment of the present invention.

In Fig. 5, the CPU 10 is a microprocessor having a common bus interface comprising a 32-bit address bus and a 32-bit data bus.

In Fig. 4, CPU 10 performs a read/write operation by sending an address-strobe signal (called AS hereafter) which validates the address signal on the address bus and by sending a write command (called WRITE hereafter), then by receiving data-acknowledgement signal (called DTACK hereafter) from the CCTL 14.

A read or write operation is specified depending on whether the WRITE signal is logical 0 ("0") or logical 1 ("1"), respectively. When AS becomes "0", a bus cycle begins and the address on the address bus becomes valid and, when the CPU 10 is to perform a write operation, data on the data bus also becomes valid.

The cache memory 11, main memory (MM) 12 or port 13, upon receipt of data to be written therein, sets DTACK to "0" to inform CPU 10 of completion of the bus cycle.

In a read operation, the cache memory 11, main memory 12 or port 13 sets DTACK to "0" when AS is "0" and when data is ready for sending to CPU 10, to indicate that the data on the data bus is valid.

The cache memory (CACHE) 11 holds a copy of data from adjacent addresses of main memory (MM) 12 in units of one line consisting of 16 bytes.

The address decoder (called DEC hereafter) 17 decodes the high-order 8 address bits (31-24) of the address bus coming from CPU 10. DEC 17 outputs signal FLUSH or SEND depending on the decoded value, i.e., hexadecimal 1 or 2, respectively.

The tag circuit (called TAG hereafter) 18 includes a tag memory for storing the high-order 8 bits (23-16) of the main memory address from which data is cached. TAG 18 compares the contents of the tag memory addressed by address bits 15-4 with the high-order 8 address bits (23-16). When they agree, TAG 18 sets the MATCH signal to "1" to indicate that the addressed data is cached.

The cache memory controller (CCTL) 14 controls the common bus interface (consisting of the data bus, address bus and other control signals) to transfer data between the CPU 10, cache memory 11, main memory 12 and port 13. The CCTL 14 accesses the main memory 12 when the MATCH signal is "0", and the cache memory 11 when the MATCH signal is "1". When Line Sending is specified (SEND signal is "1"), it reads a ready signal ε (or the status register via the common bus interface) to check to see if the port 13 is in a ready state (i.e., the port 13 is ready to write a message therein).

When the FLUSH and MATCH signals are both "1", CCTL 14 sets the WTC (write cache) signal to "0" (i.e., read) and the ASC (address strobe cache) signal to "0" (active) to read data from the cache memory 11. CCTL 14 then sets the WTM (write main memory) signal to "1" (i.e., write) and the ASM (address strobe main memory) signal to "0" (active) to write the data read from the cache memory 11 into main memory 12. CCTL 14 sets the FLOAT signal to "1" so that the driver/receiver circuits (D/R) may assume a a-high impedance state to electrically disconnect CPU 10.

Next, when the SEND and MATCH signals are both "1" and the port 13 is in a ready state, CCTL 14 sets the WTC (write cache) signal to "0" (i.e., read) and the ASC (address strobe cache) signal to "0" (active) to read data from the cache memory 11 and to output the data onto the common bus 16. CCTL 14 then sets the WTD (write device) signal to "1" (i.e., write) and the ASD (address strobe device) signal to "0" (active) to write the data on the common bus 16 into the port 13. In this case, too, CCTL 14 sets the FLOAT signal to "1" to electrically disconnect CPU 10.

When the SEND signal is "1" and the MATCH signal is "0" and the port 13 is in a ready state, CCTL 14 sets the WTM signal to "0" (i.e., read) and the ASM signal to "0" (active) to read data from main memory (MM) 12 and to output the data onto the common bus 16. CCTL 14 then sets the WTD signal to "1" (i.e., write) and the ASD signal to "0" (active) to write the data on the common bus 16 (i.e., the data read from main memory 12) into the port 13 and sets the FLOAT signal to "1".

The following is the second embodiment of the present invention:

In the first embodiment, the Line Send instruction is recognized by detecting a particular address, that is, "A + SEND" for the address part of a write instruction. The second embodiment realizes it by providing a multiplexer (may be called MPX hereafter) 20 and a decoder (may be called DEC hereafter) 17b.

The multiplexer 20 selects the address bus or the data bus to connect to the address bus. The decoder 17b decodes the address bits on the address bus and, when a particular code (e.g. FFFb) is detected, outputs a SELECT signal which enables the multiplexer 20 to select the data bus. A particular memory address FFFb, for example, is for recognizing a Line Send instruction. An address 2000, for example, is where data to be written into the port 13 is stored. Executing an ordinary instruction Load stores 2000 in a register A. Next, when a store instruction "ST A FFFb" is issued, the decoder 17b detects FFFb and outputs the SELECT signal. The multiplexer 20 outputs the contents of register A (i.e. 2000) onto the address bus to read data from cache memory 11 for writing into the port 13.

The present invention can also be applied to a computer system without memory hierarchy, that is, without a cache memory. The third embodiment practicing this case is shown in Fig. 7.

In Fig. 7, a main memory controller (called MCTL hereafter) 15 is used in place of CCTL 14 shown in Fig. 5. When an address decoder (DEC) 17a interprets a particular address A + SEND, MCTL 15 reads data from address A of the main memory (MM) 12 and writes the read data into the port 13 in the same way as in the first embodiment where the SEND signal is "1" and the MATCH signal is "0". Thus, a message can be transferred to the port 13 from the main memory 12 just by issuing a Line Send instruction as illustrated in the first embodiment and also in the second embodiment.

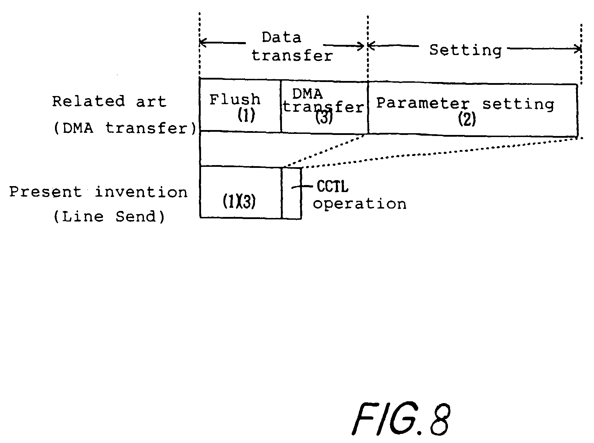

Fig. 8 is a diagram for evaluating the present invention in comparison with the related art.

According to our trial calculation, the time required for transferring data from the cache memory 11 to the port 13 has been reduced to about 1/4 in comparison with that of the related art.

Thus, in a parallel computer system interconnecting a plurality of processor elements, each having a cache memory, through communication paths, the present invention has realized a data transmission control apparatus which can transmit messages between the processor elements quickly, with a reduced load to a program and with a reduced memory area for message buffering.

## Claims

1. Data transmission control apparatus which controls data transmission between processing systems (1) via a transmission line (2), each processing system (1) including a main memory (12) storing data, said data transmission control apparatus comprising:
transmission means (13), connected to said transmission line (2), for holding data therein and for transmitting the data written therein to another one of said processing systems (1); and
transfer means for reading data from said main memory (12) and writing said data into said transmission means (13),
**characterized in that**
instruction means (14, 15, 17, 17a) are provided for providing an instruction to address data in said main memory (12) of one of said processing systems (1) by a memory address and to transmit the data addressed by the instruction, and, when receiving a completion signal, for completing the instruction;
said transmission means (13) is further provided for outputting a ready signal when said transmission means (13) is ready to write data therein; and
said transfer means is further provided for, based on the instruction and the ready signal, reading a predetermined length of a data block starting with the data addressed by said instruction means (14, 15, 17, 17a) from said main memory (12) and writing the data block read into said transmission means (13) and thereafter outputting the completion signal to said instruction means (14, 15, 17, 17a),

2. Data transmission control apparatus according to claim 1,
**characterized in that**
said instruction means (14, 15, 17, 17a) ouputs an operation code to instruct transmission of the data addressed; and
said instruction means (14, 15, 17, 17a) comprises decoder means for decoding the operation code to instruct said transfer means to transfer the data addressed.

3. Data transmission control apparatus acording to claim 1,
**characterized in that**
the instruction to transmit the data addressed includes at least an address part; and
said instruction means (14, 15, 17, 17a) comprises decoder means for decoding the address part to instruct said transfer means to transfer the data addressed.

4. Data transmission control apparatus according to claim 1,
**characterized in that**
the memory address includes a main memory address;
the instruction to transmit the addressed data includes at least an address part, the address part having a first part and a second part, the first part giving an instruction to transmit the data addressed and the second part designating the main memory address where the data to be transmitted is stored; and
said instruction means (14, 15, 17, 17a) comprises decoder means for decoding the first part to instruct said transfer means to transfer the data addressed.

5. Data transmission control apparatus according to claim 1,
**characterized in that**
the memory address includes a main memory address;
the instruction to transmit the data addressed includes at least a first instruction to load a register with the main memory address where the data to be transmitted is stored and a second instruction having an address part, the address part including a code to instruct said transfer means to transfer the data addressed; and
said instruction means (14, 15, 17, 17a) comprises decoder means for decoding the address part to detect the code and selection means for selecting contents of said register as the main memeory address based on the code detected by said decoder means.

6. Data transmission control apparatus according to any one of claims 1-5 which controls data transmission between processing systems (1) via a transmission line (2), each processing system (1) including a main memory (12) and a cache memory (11) storing data,
**characterized in that**
said instruction means (14, 15, 17, 17a) is provided for providing an instruction to address data in said cache memory (11) or said main memory (12) of the one of said processing systems (1) by the memory address;
a judgement means (18) is provided for determining whether the data addressed by the instruction is in said cache memory (11) and for providing a match signal in dependence upon the determining by said judgement means (18); and
said transfer means is provided for reading the data block from one of said cache memory (11) and said main memory (12) based on whether the match signal is one of on or off.

7. Data transmission control apparatus according to claim 6,
**characterized in that**
the memory address includes main memory address bits; and
said judgement means (18) includes a memory means for storing the main memory address bits corresponding to the data stored in the cache memory (11), and comparison means for comparing contents of said memory means with the main memory address bits ouput by said instruction means (14, 15, 17, 17a).

8. Data transmission control apparatus according to claim 6,
**characterized in that**
the memory address includes main memory address bits, the main memory address bits include a first part and a second part; and
said judgement means (18) includes a memory means for storing the first part of the main memory address bits corresponding to the data stored in the cache memory (11), access means for accessing said memory means using the second part of the main meory address bits, and comparison means for comparing bit-by-bit contents of said memory means with the first part of the main memory address bits output by said instruction means (14, 15, 17, 17a).

## Patentansprüche

1. Datenübermittlungs-Steuergerät, welches die Datenübermittlung zwischen Verarbeitungssystemen (1) über eine Übermittlungsleitung (2) steuert, wobei jedes Verarbeitungssystem (1) einen Hauptspeicher (12) umfaßt, der Daten speichert, wobei das Datenübermittlungs-Steuergerät umfaßt:
eine Übermittlungseinrichtung (13), die mit der Übermittlungsleitung (2) verbunden ist, um darin Daten zu halten und um die Daten, die darin geschrieben sind, zu einem anderen der Verarbeitungssysteme (1) zu übertragen; und
eine Übertragungseinrichtung zum Lesen der Daten aus diesem Hauptspeicher (12) und zum Schreiben dieser Daten in die Übermittlungseinrichtung (13),
**dadurch gekennzeichnet, daß**
eine Instruktionseinrichtung (14, 15, 17, 17a) vorgesehen ist, um eine Instruktion zu Adreßdaten im Hauptspeicher (12) eines dieser Verarbeitungssysteme (1) durch eine Speicheradresse bereitzustellen und um die Daten, die durch die Instruktion adressiert sind, zu übermitteln, und, wenn ein Beendigungssignal empfangen wird, die Instruktion zu beenden;
die Übermittlungseinrichtung (13) außerdem dazu vorgesehen ist, ein verfügbares Signal auszugeben, wenn die Übermittlungseinrichtung (13) bereit ist, Daten darin zu schreiben; und
die Übertragungseinrichtung außerdem dazu vorgesehen ist, um auf der Basis der Instruktion und des verfügbaren Signals eine vorherbestimmte Länge eines Datenblocks beginnend mit den Daten, die durch die Instruktionseinrichtung (14, 15, 17, 17a) vom Hauptspeicher (12) adressiert sind, zu lesen, und um den gelesenen Datenblock in die Übermittlungseinrichtung (13) zu schreiben und danach das Beendigungssignal an die Instruktionseinrichtung (14, 15, 17, 17a) auszugeben.

2. Datenübermittlungs-Steuergerät nach Anspruch 1,
**dadurch gekennzeichnet, daß**
die Instruktionseinrichtung (14, 15, 17, 17a) einen Operationscode ausgibt, um die Übermittlung der adressierten Daten anzuweisen; und
die Instruktionseinrichtung (14, 15, 17, 17a) einen Decoder umfaßt, um den Operationscode zu decodieren, um die Übertragungseinrichtung anzuweisen, die adressierten Daten zu übertragen.

3. Datenübermittlungs-Steuergerät nach Anspruch 1,
**dadurch gekennzeichnet, daß**
die Instruktion, die adressierten Daten zu übermitteln, zumindest ein Adreßteil umfaßt; und
die Instruktionseinrichtung (14, 15, 17, 17a) einen Decoder umfaßt, um das Adreßteil zu decodieren, um die Übertragungseinrichtung anzuweisen, die adressierten Daten zu übertragen.

4. Datenübermittlungs-Steuergerät nach Anspruch 1,
**dadurch gekennzeichnet, daß**
die Speicheradresse eine Hauptspeicheradresse umfaßt;
die Instruktion, die adressierten Daten zu übermitteln, zumindest ein Adreßteil umfaßt, wobei das Adreßteil ein erstes Teil und ein zweites Teil hat, wobei das erste Teil eine Instruktion gibt, die adressierten Daten zu übermitteln, und wobei das zweite Teil die Hauptspeicheradresse bestimmt, wo die zu übermittelnden Daten gespeichert werden; und
die Instruktionseinrichtung (14, 15, 17, 17a) eine Decoder umfaßt, um das erste Teil zu decodieren, um die Übertragungseinrichtung zu instruieren, die adressierten Daten zu übertragen.

5. Datenübermittlungs-Steuergerät nach Anspruch 1,
**dadurch gekennzeichnet, daß**
die Speicheradresse eine Hauptspeicheradresse umfaßt;
die Instruktion, die adressierten Daten zu übermitteln, zumindest eine erste Instruktion umfaßt, um ein Register mit der Hauptspeicheradresse zu laden, wo die zu übermittelnden Daten gespeichert sind, und eine zweite Instruktion, die ein Adreßteil hat, wobei das Adreßteil einen Code umfaßt, um die Übertragungseinrichtung zu instruieren, die adressierten Daten zu übertragen; und
die Instruktionseinrichtung (14, 15, 17, 17a) einen Decoder umfaßt, um das Adreßteil zu decodieren, um den Code zu ermitteln, und eine Auswahleinrichtung, um den Inhalt des Registers wie die Hauptspeicheradresse auf der Basis des durch den Decoder ermittelten Codes auszuwählen.

6. Datenübermittlungs-Steuergerät nach einem der Ansprüche 1 bis 5, welches die Datenübermittlung zwischen Verarbeitungssystemen (1) über eine Übermittlungsleitung (2) steuert, wobei jedes Verarbeitungssystem (1) einen Hauptspeicher (12) und einen Cache-Speicher (11) umfaßt, der Daten speichert;
**dadurch gekennzeichnet, daß**
die Instruktionseinrichtung (14, 15, 17, 17a) dazu vorgesehen ist, eine Instruktion zu Adreßdaten im Cache-Speicher (11) oder im Hauptspeicher (12) einer der Verarbeitungssysteme (1) durch die Speicheradresse vorzusehen;
eine Beurteilungseinrichtung (18) vorgesehen ist, um zu bestimmen, ob die Daten, die durch die Instruktion adressiert sind, im Cache-Speicher (11) sind, und um ein Übereinstimmungssignal in Abhängigkeit von der Bestimmung durch die Beurteilungseinrichtung (18) bereitzustellen; und
die Übertragungseinrichtung dazu vorgesehen ist, den Datenblock aus einem des Cache-Speichers (11) und des Hauptspeichers (12) auf der Basis zu lesen, ob das Übereinstimmungssignal eines von vorhanden oder nicht-vorhanden ist.

7. Datenübermittlungs-Steuergerät nach Anspruch 6,
**dadurch gekennzeichnet, daß**
die Speicheradresse die Hauptspeicheradreßbits umfaßt; und
die Beurteilungseinrichtung (18) umfaßt: einen Speicher, um die Hauptspeicheradreßbits entsprechend den im Cache-Speicher (11) gespeicherten Daten zu speichern, und eine Vergleichseinrichtung, um den Inhalt des Speichers mit den Hauptspeicheradreßbits zu vergleichen, die von der Instruktionseinrichtung (14, 15, 17, 17a) ausgegeben werden.

8. Datenübermittlungs-Steuergerät nach Anspruch 6,
**dadurch gekennzeichnet, daß**
die Speicheradresse Hauptspeicheradreßbits umfaßt, wobei die Hauptspeicheradreßbits ein erstes Teil und ein zweites Teil umfassen; und
die Beurteilungseinrichtung (18) umfaßt: einen Speicher, um das erste Teil der Hauptspeicheradreßbits entsprechend dem im Cache-Speicher (11) gespeicherten Daten zu speichern, eine Zugriffseinrichtung, um auf den Speicher zuzugreifen, wobei das zweite Teil der Hauptspeicheradreßbits verwendet wird, und eine Vergleichseinrichtung, um den Inhalt des Speichers mit dem ersten Teil der Hauptspeicheradreßbits, die von der Instruktionseinrichtung (14, 15, 17, 17a) ausgegeben werden, bitweise zu vergleichen.

## Revendications

1. Appareil de commande de transmission de données qui commande une transmission de données entre des systèmes de traitement (1) via une ligne de transmission (2), chaque système de traitement (1) incluant une mémoire principale (12) qui stocke des données, ledit appareil de commande de transmission de données comprenant :
un moyen de transmission (13) connecté à ladite ligne de transmission (2), pour bloquer des données dedans et pour transmettre les données écrites dedans à un autre desdits systèmes de traitement (1) ; et
un moyen de transfert pour lire des données à partir de ladite mémoire principale (12) et pour écrire lesdites données dans ledit moyen de transmission (13),
caractérisé en ce que :
un moyen d'instruction (14, 15, 17, 17a) est prévu pour appliquer une instruction sur des données d'adresse dans ladite mémoire principale (12) de l'un desdits systèmes de traitement (1) au moyen d'une adresse de mémoire et pour transmettre les données adressées par l'instruction et, lors de la réception d'un signal de fin, pour terminer l'instruction ;
ledit moyen de transmission (13) est en outre prévu pour émettre en sortie un signal d'état prêt lorsque ledit moyen de transmission (13) est prêt à écrire des données dedans ; et
ledit moyen de transfert est en outre prévu pour, sur la base de l'instruction et du signal d'état prêt, lire une longueur prédéterminée d'un bloc de données en partant des données adressées par ledit moyen d'instruction (14, 15, 17, 17a) à partir de ladite mémoire principale (12) et pour écrire le bloc de données lu dans ledit moyen de transmission (13) et pour ensuite émettre en sortie le signal de fin sur ledit moyen d'instruction (14, 15, 17, 17a).

2. Appareil de commande de transmission de données selon la revendication 1, caractérisé en ce que :
ledit moyen d'instruction (14, 15, 17, 17a) émet en sortie un code d'opération pour demander en instruction la transmission des données adressées ; et
ledit moyen d'instruction (14, 15, 17, 17a) comprend un moyen de décodeur pour décoder le code d'opération pour demander en instruction audit moyen de transfert de transférer les données adressées.

3. Appareil de commande de transmission de données selon la revendication 1, caractérisé en ce que :
l'instruction pour transmettre les données adressées inclut au moins une partie d'adresse ; et
ledit moyen d'instruction (14, 15, 17, 17a) comprend un moyen de décodeur pour décoder la partie d'adresse pour demander en instruction audit moyen de transfert de transférer les données adressées.

4. Appareil de commande de transmission de données selon la revendication 1, caractérisé en ce que :
l'adresse de mémoire inclut une adresse de mémoire principale ;
l'instruction pour transmettre les données adressées inclut au moins une partie d'adresse, la partie d'adresse comportant une première partie et une seconde partie, la première partie appliquant une instruction pour transmettre les données adressées et la seconde partie désignant l'adresse de mémoire principale au niveau de laquelle les données à transmettre sont stockées; et
ledit moyen d'instruction (14, 15, 17, 17a) comprend un moyen de décodeur pour décoder la première partie afin de demander en instruction audit moyen de transfert de transférer les données adressées.

5. Appareil de commande de transmission de données selon la revendication 1, caractérisé en ce que :
l'adresse de mémoire inclut une adresse de mémoire principale ;
l'instruction pour transmettre les données adressées inclut au moins une première instruction pour charger un registre à l'aide de l'adresse de mémoire principale au niveau de laquelle les données à transmettre sont stockées et une seconde instruction comportant une partie d'adresse, la partie d'adresse incluant un code pour demander en instruction audit moyen de transfert de transférer les données adressées ; et
ledit moyen d'instruction (14, 15, 17, 17a) comprend un moyen de décodeur pour décoder la partie d'adresse afin de détecter le code et un moyen de sélection pour sélectionner le contenu dudit registre en tant qu'adresse de mémoire principale sur la base du code détecté par ledit moyen de décodeur.

6. Appareil de commande de transmission de données selon l'une quelconque des revendications 1 à 5, lequel commande une transmission de données entre des systèmes de traitement (1) via une ligne de transmission (2), chaque système de traitement (1) incluant une mémoire principale (12) et une mémoire cache (11) stockant des données, caractérisé en ce que :
ledit moyen d'instruction (14, 15, 17, 17a) est prévu pour appliquer une instruction pour adresser des données dans ladite mémoire cache (11) ou dans ladite mémoire principale (12) de l'un desdits systèmes de traitement (1) à l'aide de l'adresse de mémoire ;
un moyen d'appréciation (18) est prévu pour déterminer si oui ou non les données adressées à l'aide de l'instruction sont dans ladite mémoire cache (11) et pour produire un signal de correspondance en fonction de la détermination par ledit moyen d'appréciation (18) ; et
ledit moyen de transfert est prévu pour lire le bloc de données à partir d'une mémoire prise parmi ladite mémoire cache (11) et ladite mémoire principale (12) sur la base de si le signal de correspondance est un signal d'activation ou de désactivation.

7. Appareil de commande de transmission de données selon la revendication 6, caractérisé en ce que :
l'adresse de mémoire inclut des bits d'adresse de mémoire principale ; et
ledit moyen d'appréciation (18) inclut un moyen de mémoire pour stocker les bits d'adresse de mémoire principale correspondant aux données stockées dans la mémoire cache (11) et un moyen de comparaison pour comparer le contenu dudit moyen de mémoire avec les bits d'adresse de mémoire principale émis en sortie par ledit moyen d'instruction (14, 15, 17, 17a).

8. Appareil de commande de transmission de données selon la revendication 6, caractérisé en ce que :
l'adresse de mémoire inclut des bits d'adresse de mémoire principale, les bits d'adresse de mémoire principale incluent une première partie et une seconde partie ; et
ledit moyen d'appréciation (18) inclut un moyen de mémoire pour stocker la première partie des bits d'adresse de mémoire principale correspondant aux données stockées dans la mémoire cache (11), un moyen d'accès pour accéder audit moyen de mémoire en utilisant la seconde partie des bits d'adresse de mémoire principale et un moyen de comparaison pour comparer bit à bit le contenu dudit moyen de mémoire avec la première partie des bits d'adresse de mémoire principale émis en sortie par ledit moyen d'instruction (14, 15, 17, 17a).
